# EUROPÄISCHE PATENTSCHRIFT

(11) **EP 1 479 909 B1**
(45) Veröffentlichungstag und Bekanntmachung des Hinweises auf die Patenterteilung: **14.06.2006**
(21) Anmeldenummer: 04008174.7
(22) Anmeldetag: 03.04.2004
(51) Int. Cl.: F04B 39/00, F04B 53/00, F04B 53/14

(54) **Pleuel für den Kolben eines Verdichters**
Piston rod of a compressor
Bielle de piston pour un compresseur

(30) Priorität: 22.05.2003 DE 10323125
(43) Veröffentlichungstag der Anmeldung: 24.11.2004
(73) Patentinhaber: AMK Arnold Müller GmbH & Co.KG, 73230 Kirchheim / Teck (DE)
(72) Erfinder: Müller, Arnold, 73230 Kirchheim/Teck (DE)
(74) Vertreter: Kratzsch, Volkhard

(56) Entgegenhaltungen:
- DE-A- 10 042 214
- DE-A- 10 155 776
- GB-A- 2 288 864
- US-A- 2 343 211

## Beschreibung

Die Erfindung bezieht sich auf ein Pleuel für den Kolben eines Verdichters mit den Merkmalen im Oberbegriff des Anspruchs 1. Ein Pleuel dieser Art wird üblicherweise bei einem Verdichter zwischen dem Ausgang einer Antriebseinrichtung und einem Kolben bzw. Kolbenträger des Verdichters platziert, um über das Pleuel die rotierende, exzentrische Abtriebsbewegung der Antriebseinrichtung in eine hin- und hergehende Bewegung des Kolbens umzusetzen. Eine derartige Anordnung bei einem Verdichter ist bekannt (EP 12 33 183 A1). Es hat sich gezeigt, dass während des Bewegungsvorganges des Kolbens beim Kolben und bei den Ventilen des Verdichters Schwingungen entstehen, die über das Pleuel und das Pleuellager übertragen werden. Ferner entstehen auch von der Antriebseinrichtung und dessen Exzenter her Schwingungen. Diese Schwingungen können aufgrund der mechanischen Beanspruchungen frühzeitige Lagerschäden hervorrufen und haben ferner den Nachteil, dass dadurch störende Geräusche erzeugt werden, die insbesondere dann unangenehm sind, wenn derartige Verdichter z. B. in Fahrzeugen eingebaut werden.

Zur Dämpfung von Schwingungen ist es bei einem Kolbenkompressor bekannt (DE 10 042 214 A1), für einen Kolben, dem zum Massenausgleich kein weiterer Kolben gegenüber liegt, das Pleuel als Ausgleichspleuel derart auszubilden, dass dieses mit einer Zusatzmasse ausgestattet ist, die den auf der Pleuelachse gelegenen Schwerpunkt gegenüber den übrigen Pleueln des Verdichters in Richtung zum Kolben hin verschiebt, um einen dynamischen Massenausgleich herbeizuführen. Durch diesen dynamischen Massenausgleich soll eine Schwingungsdämpfung erreicht werden.

Es ist ferner ein Pleuel für eine Brennkraftmaschine mit innerer Verbrennung bekannt (GB 2 288 864 A), an dessen Pleuelkopf, nahe dem Kolben, zwei Exzenterwellen gelagert sind, die beidendig überstehende Exzenter aufweisen. Auf jedem Exzenter ist ein Hebel schwenkbar gelagert, wobei diese vier Hebel am Kolbenbolzen des Kolbens angreifen. Bei jedem Hebelpaar ist zwischen den einander zugewandten Flächen eine Schicht aus einem Elastomer angeklebt, welche beim Zusammenbau die Hebel zusammenhält und beim Betrieb eine Bewegung der Exzenter in Grenzen aufeinander zu und voneinander weg gestattet. Die Schicht übt auf die Hebel eine geringe Kraft in Richtung Trennung der Exzenter aus, wobei das Material auch geräuschdämpfend wirkt.

Der Erfindung liegt die Aufgabe zugrunde, ein Pleuel der eingangs genannten Art so auszubilden, dass bei dessen Einbau in den Verdichter in diesem Bereich entstehende Schwingungen gedämpft und dadurch erzeugte Geräusche zumindest reduziert werden.

Die Aufgabe ist bei einem Pleuel der eingangs genannten Art gemäß der Erfindung durch die Merkmale im Anspruch 1 gelöst. Aufgrund der mindestens einen Schwingungsdämpfungseinrichtung, die im Bereich des Pleuellagers angeordnet ist, wird eine sehr gute Schwingungsdämpfung erzielt mit dem Ergebnis, dass dadurch sonst entstehende Geräusche um ein Vielfaches reduziert werden. Dadurch eignet sich ein mit einem derartigen Pleuel ausgestatteter Verdichter mit besonderem Vorzug zum Einbau überall dort, wo es auf Geräuscharmut besonders ankommt, z. B. bei Fahrzeugen. Die Gestaltung ist einfach, kostengünstig und betriebssicher. Aufgrund der erreichten Schwingungsdämpfung kann auch eine Steigerung der Lebensdauer der Lager erzielt werden.

Weitere besondere Erfindungsmerkmale und Ausgestaltungen dazu ergeben sich aus den weiteren Ansprüchen.

Weitere Einzelheiten und Vorteile der Erfindung ergeben sich aus der nachfolgenden Beschreibung.

Der vollständige Wortlaut der Ansprüche ist vorstehend allein zur Vermeidung unnötiger Wiederholungen nicht wiedergegeben, sondern statt dessen lediglich durch Hinweis auf die Ansprüche darauf Bezug genommen, wodurch jedoch alle diese Anspruchsmerkmale als an dieser Stelle ausdrücklich und erfindungswesentlich offenbart zu gelten haben. Dabei sind alle in der vorstehenden und folgenden Beschreibung erwähnten Merkmale sowie auch die allein aus den Zeichnungen entnehmbaren Merkmale weitere Bestandteile der Erfindung, auch wenn sie nicht besonders hervorgehoben und insbesondere nicht in den Ansprüchen erwähnt sind.

Die Erfindung ist nachfolgend anhand von in den Zeichnungen gezeigten Ausführungsbeispielen näher erläutert. Es zeigen:
- Fig. 1: einen schematischen Schnitt eines Kolbens mit daran angreifendem Pleuel eines ansonsten nicht weiter gezeigten Verdichters, gemäß einem ersten Ausführungsbeispiel,
- Fig. 2: einen schematischen Schnitt eines Kolbens mit daran angreifendem Pleuel ähnlich Fig. 1 gemäß einem zweiten Ausführungsbeispiel.

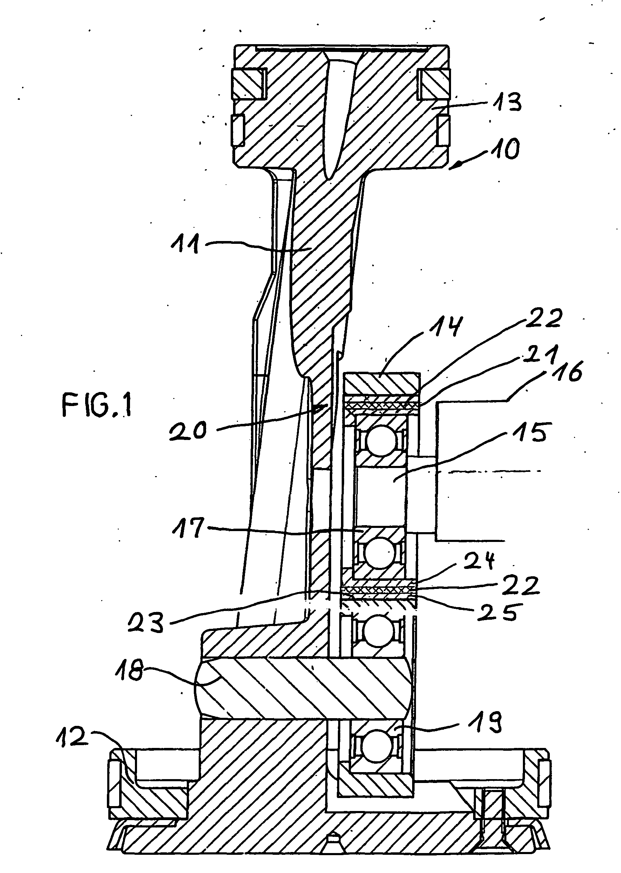

In Fig. 1 ist ein Kolben 10 eines im übrigen nicht weiter gezeigten Verdichters gezeigt, der mit einem nicht dargestellten elektrischen Hochleistungsmotor analog EP 12 33 183 A1 zu einer Funktionseinheit zusammengebaut sein kann. Der Kolben 10 ist als Doppelkolben ausgebildet, der einen länglichen Kolbenträger 11 aufweist, der an einem Ende einen ersten Kolben 12 mit großem Durchmesser für eine erste Druckstufe und am gegenüberliegenden Ende einen zweiten Kolben 13 mit kleinerem Durchmesser für eine zweite Druckstufe aufweist. Aufgrund dieser Gestaltung des Kolbens 10 ist der nicht weiter gezeigte Verdichter zweistufig. Der Kolbenträger 11 bildet mit zumindest einem der beiden Kolben 12, 13 ein einstückiges Bauteil, das z. B. als Formteil aus Kunststoff oder aus Aluminiumdruckguss ausgebildet ist.

Der Kolben 10, insbesondere dessen Kolbenträger 11, ist mittels eines Pleuels 14 angetrieben, das auf einem Exzenter 15 am Ende einer Welle 16 mittels eines Lagers 17, z. B. eines Kugellagers, drehbar gelagert ist. Die Welle 16 ist Teil einer Antriebseinrichtung in Form eines nicht weiter gezeigten elektrischen Hochleistungsmotors. Das Pleuel 14 verläuft etwa parallel zum Kolbenträger 11 und etwa rechtwinklig zur Längsmittelachse der Welle 16. In radialem Abstand vom Exzenter 15 ist am Kolbenträger 11 ein quer verlaufender Bolzen 18 fest angebracht, der somit fester Bestandteil des Kolbenträgers 11 ist und von diesem etwa parallel zur Längsmittelachse der Welle 16 und in Richtung zu dieser hin so weit absteht, dass das Pleuel 14 mittels eines Lagers 19, z. B. eines Kugellagers, damit schwenkbeweglich, insbesondere drehbar, koppelbar ist. Das Lager 19 sitzt mit seinem Innenring fest auf dem Bolzen 18 auf, während dessen Außenring drehfest im Pleuel 14 aufgenommen ist.

Das andere Lager 17, nachfolgend als Pleuellager 17 bezeichnet, verläuft im wesentlichen in der gleichen Radialebene wie das Lager 19, jedoch radial versetzt dazu, und sitzt mit seinem Innenring fest auf dem Exzenter 15. Im Verlauf des Pleuels 14 zwischen dem Pleuellager 17 und der Koppelstelle mit dem Lager 19 ist mindestens eine Schwingungsdämpfungseinrichtung 20 angeordnet, die im Bereich der Koppelstelle, z.B. des dortigen Lagers 19,und/oder - wie in Fig. 1 ausgeführt ist - im Bereich des Pleuellagers 17 vorgesehen ist. Diese Schwingungsdämpfungseinrichtung 20 weist eine schwingungsdämpfende Lageraufnahme 21 auf, welche eine schwingungsdämpfende Schicht 22 aufweist, die elastisch ist, insbesondere aus Gummi, Kunstgummi od. dgl. gebildet ist. Die schwingungsdämpfende Schicht 22 weist z. B. eine Härte von etwa 80° Shore A auf.

Beim gezeigten Ausführungsbeispiel gemäß Fig. 1 weist die schwingungsdämpfende Lageraufnahme 21 eine Gummifeder auf, während bei einem anderen, nicht gezeigten Ausführungsbeispiel die Lageraufnahme 21 allein aus der schwingungsdämpfenden Schicht 22 gebildet sein kann. In diesem Fall ist das Pleuellager 17 mit seinem Außenring unmittelbar in die schwingungsdämpfende Schicht 22 eingebettet, die ihrerseits in einer Aufnahme 23, insbesondere Bohrung, im Pleuel 14 angeordnet ist. In der Ausbildung der Lageraufnahme 21 als in Fig. 1 dargestellte Gummifeder weist diese zwei konzentrische Ringe 24 und 25, insbesondere aus Metall, und zwischen den Ringen 24, 25 die ringförmig verlaufende Schicht 22 auf, die z. B. als anvulkanisierte Gummischicht ausgebildet ist. Mittels der schwingungsdämpfenden Lageraufnahme 21 ist das Pleuellager 17 in die Aufnahme 23 des Pleuels 14 eingebettet. Die Anordnung der Schwingungsdämpfungseinrichtung 20 an dieser Stelle hat sich als besonders vorteilhaft erwiesen. Die schwingungsdämpfende Schicht 22 ist so ausgelegt, dass diese in Umfangsrichtung eine größere Elastizität als in radialer Richtung aufweist, vorzugsweise in radialer Richtung z. B. relativ starr ist.

Bei einem nicht gezeigten anderen Ausführungsbeispiel kann auch das Lager 19 der Koppelstelle mittels einer schwingungsdämpfenden Lageraufnahme analog der Lageraufnahme 21 in das Pleuel 14 und/oder in einen Teil des Kolbens 10, z. B. des Kolbenträgers 11, eingebettet sein.

Aufgrund der Anordnung der mindestens einen Schwingungsdämpfungseinrichtung 20 wird eine sehr gute Dämpfung von Schwingungen erreicht, die während des Bewegungsvorganges des Kolbens 10 entstehen und über das Pleuel 14 und die Lager 17 und 19 übertragen werden und die andererseits durch die nicht weiter gezeigte Antriebseinrichtung und den Exzenter 15 entstehen. Derartige Schwingungen belasten nicht nur die Lager sondern führen zu störenden Geräuschen, die sich insbesondere dann besonders unangenehm bemerkbar machen, wenn so ausgebildete Verdichter z. B.in Fahrzeugen eingebaut sind. Aufgrund der Schwingungsdämpfungseinrichtung 20 werden also derartige Schwingungen im Bereich der Lageraufnahme 21 von der Schicht 22 aufgenommen und gedämpft, wodurch eine Geräuschminderung um ein Vielfaches erreicht wird.

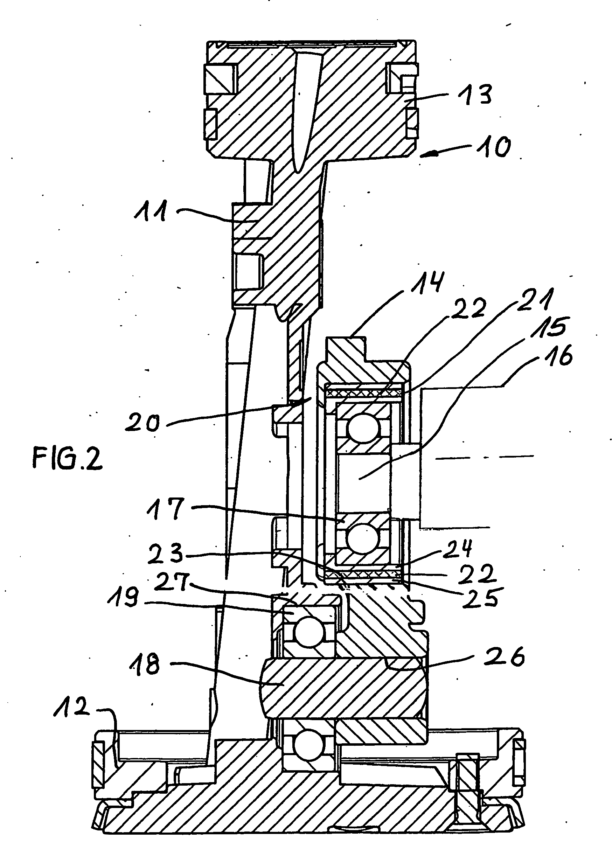

Bei dem in Fig. 2 gezeigten zweiten Ausführungsbeispiel sind für die Teile, die dem ersten Ausführungsbeispiel entsprechen, gleiche Bezugszeichen verwendet, so dass dadurch auf die Beschreibung des ersten Ausführungsbeispieles Bezug genommen ist.

Das zweite Ausführungsbeispiel unterscheidet sich vom ersten dadurch, dass beim zweiten Ausführungsbeispiel in Fig. 2 der Bolzen 18 in einer Bohrung 26 des Pleuels 14 befestigt ist, z. B. eingepresst ist, und in Querrichtung in der Zeichnung nach links über das Pleuel 14 und zum Kolbenträger 11 hin übersteht, wobei im Bereich der dortigen Koppelstelle das Lager 19 nicht, wie in Fig. 1, im Pleuel 14 sondern statt dessen in einer Bohrung 27 des Kolbenträgers 11 angeordnet ist, in der das Lager 19 mit seinem Außenring enthalten ist, während der Lagerinnenring fest auf dem Bolzen 18 sitzt. Auch in Fig. 2 ist entsprechend dem ersten Ausführungsbeispiel mindestens eine Schwingungsdämpfungseinrichtung 20 im Bereich des Pleuellagers 17 vorgesehen, die in gleicher Weise beschaffen ist, wie anhand von Fig. 1 vorstehend erläutert ist.

Auch beim zweiten Ausführungsbeispiel gemäß Fig. 2 kann zusätzlich oder statt dessen das Lager 19 der Koppelstelle mittels einer schwingungsdämpfenden Lageraufnahme 21 in einen Teil des Kolbens 10, insbesondere des Kolbenträgers 11, eingebettet sein.

## Patentansprüche

1. Pleuel für den Kolben eines Verdichters, insbesondere für einen Doppelkolben, das mit einem Abschnitt mittels eines Pleuellagers (17) auf einem Exzenter (15) einer Antriebseinrichtung (16) lagerbar ist und in Abstand davon mit einem Kolben (10) schwenkbeweglich an einer Koppelstelle (19) koppelbar ist, wobei zumindest eine Schwingungsdämpfungseinrichtung im Pleuelverlauf zwischen dem Pleuellager (17) und der Koppelstelle (19) angeordnet ist,
**dadurch gekennzeichnet,**
**dass** die Schwingungsdämpfungseinrichtung (20) im Bereich des Pleuellagers (17) vorgesehen ist.

2. Pleuel nach Anspruch 1,
**dadurch gekennzeichnet,**
**dass** die Schwingungsdämpfungseinrichtung (20) im Bereich der Koppelstelle, z.B. eines dortigen Lagers (19), vorgesehen ist.

3. Pleuel nach einem der Ansprüche 1 oder 2,
**dadurch gekennzeichnet,**
**dass** die Schwingungsdämpfungseinrichtung (20) eine schwingungsdämpfende Lageraufnahme (21) aufweist.

4. Pleuel nach Anspruch 3,
**dadurch gekennzeichnet,**
**dass** die schwingungsdämpfende Lageraufnahme (21)eine schwingungsdämpfende Schicht (22) aufweist.

5. Pleuel nach Anspruch 4,
**dadurch gekennzeichnet,**
**dass** die schwingungsdämpfende Schicht (22) der Lageraufnahme (21) elastisch ist, insbesondere aus Gummi, Kunstgummi od. dgl. gebildet ist.

6. Pleuel nach Anspruch 5 oder 6,
**dadurch gekennzeichnet,**
**dass** die schwingungsdämpfende Schicht (22) eine Härte von etwa 80° Shore A aufweist.

7. Pleuel nach einem der Ansprüche 3 bis 6,
**dadurch gekennzeichnet,**
**dass** die Lageraufnahme allein aus der schwingungsdämpfenden Schicht (22) gebildet ist.

8. Pleuel nach einem der Ansprüche 3 bis 6,
**dadurch gekennzeichnet,**
**dass** die schwingungsdämpfende Lageraufnahme (21) eine Gummifeder aufweist.

9. Pleuel nach Anspruch 8,
**dadurch gekennzeichnet,**
**dass** die Gummifeder zwei konzentrische Ringe (24, 25), insbesondere aus Metall, und zwischen den Ringen (24, 25) eine ringförmige, z.B. anvulkanisierte, Gummischicht (22) aufweist.

10. Pleuel nach einem der Ansprüche 4 bis 9,
**dadurch gekennzeichnet,**
**dass** die schwingungsdämpfende Schicht (22) so ausgelegt ist, dass diese in Umfangsrichtung eine größere Elastizität als in radialer Richtung aufweist, vorzugsweise in radialer Richtung relativ starr ist.

11. Pleuel nach einem der Ansprüche 1 bis 10,
**dadurch gekennzeichnet.**
**dass** das Pleuellager (17) mittels der schwingungsdämpfenden Lageraufnahme (21) in das Pleuel (14) eingebettet ist.

12. Pleuel nach einem der Ansprüche 1 bis 11,
**dadurch gekennzeichnet.**
**dass** das Lager (19) der Koppelstelle mittels der schwingungsdämpfenden Lageraufnahme (21) in das Pleuel (14) und/oder in einen Teil (11) des Kolbens (10) eingebettet ist.

## Claims

1. Connecting rod for the piston of a compressor, in particular for a double piston, which with one portion can be mounted by means of a connecting rod (17) on an eccentric (15) of a driving device (16), and can be coupled at a distance therefrom with a piston (10) in a pivotal manner at a coupling point (19), whereby at least one vibration damping device is arranged in the path of the connecting rod between the connecting rod bearing (17) and the coupling point (19),
**characterised in that**
the vibration damping device (20) is provided in the region of the connecting rod bearing (17).

2. Connecting rod according to claim 1,
**characterised in that**
the vibration damping device (20) is provided in the region of the coupling point, e.g. of a bearing (19) located there.

3. Connecting rod according to claim 1 or 2,
**characterised in that**
the vibration damping device (20) comprises a vibration damping bearing mount (21).

4. Connecting rod according to claim 3,
**characterised in that**
the vibration damping bearing mount (21) comprises a vibration damping layer (22).

5. Connecting rod according to claim 4,
**characterised in that**
the vibration damping layer (22) of the bearing mount (21) is resilient, in particular is made of rubber, synthetic rubber or the like.

6. Connecting rod according to claim 5 or 6,
**characterised in that**
the vibration damping layer (22) has a hardness of about 80° shore A.

7. Connecting rod according to one of claims 3 to 6,
**characterised in that**
the bearing mount is formed solely from the vibration damping layer (22).

8. Connecting rod according to one of claims 3 to 6,
**characterised in that**
the vibration damping bearing mount (21) comprises a rubber spring.

9. Connecting rod according to claim 8,
**characterised in that**
the rubber spring comprises two concentric rings (24, 25), that are made in particular of metal, and an annular, e.g. vulcanised, rubber layer (22) provided between the rings (24, 25).

10. Connecting rod according to one of claims 4 to 9,
**characterised in that**
the vibration damping layer (22) is designed so that in peripheral direction it has a greater elasticity than in radial direction, and is preferably relatively rigid in radial direction.

11. Connecting rod according to one of claims 1 to 10,
**characterised in that**
the connecting rod bearing (17) is embedded into the connecting rod (14) by means of the vibration damping bearing mount (21).

12. Connecting rod according to one of claims 1 to 11,
**characterised in that**
the bearing (19) of the coupling point is embedded by means of the vibration damping bearing mount (21) into the connecting rod (14) and/or in a portion (11) of the piston (10).

## Revendications

1. Bielle pour le piston d'un compresseur, en particulier pour un double piston, qui peut être supportée par une section au moyen d'un palier de bielle (17) sur un excentrique (15) d'un dispositif d'entraînement et peut, à distance de celui-ci, être couplée à un piston (10) de manière à pivoter sur un point de couplage (19), au moins un dispositif amortisseur de vibrations étant disposé sur l'extension de la bielle entre le palier de bielle (17) et le point de couplage (19),
**caractérisée en ce**
**que** le dispositif amortisseur de vibrations (20) est prévu dans la zone du palier de bielle (17).

2. Bielle selon la revendication 1,
**caractérisée en ce**
**que** le dispositif amortisseur de vibrations (20) est prévu dans la zone du point de couplage, par exemple d'un palier (19) placé à cet endroit.

3. Bielle selon l'une des revendications 1 ou 2,
**caractérisée en ce**
**que** le dispositif amortisseur de vibrations (20) comporte un logement de palier amortisseur de vibrations (21).

4. Bielle selon la revendication 3,
**caractérisée en ce**
**que** logement de palier amortisseur de vibrations (21) comporte une couche amortissant les vibrations (22).

5. Bielle selon la revendication 4,
**caractérisée en ce**
**que** la couche amortissant les vibrations (22) du logement de palier (21) est réalisée de manière élastique, en particulier en caoutchouc, caoutchouc synthétique ou similaire.

6. Bielle selon la revendication 5 ou 6,
**caractérisée en ce**
**que** la couche amortissant les vibrations (22) présente une durée Shore A d'environ 80°.

7. Bielle selon l'une des revendications 3 à 6,
**caractérisée en ce**
**que** le logement de palier est constitué uniquement de la couche amortissant les vibrations (22).

8. Bielle selon l'une des revendications 3 à 6,
**caractérisée en ce**
**que** le logement de palier amortisseur de vibrations (21) comporte un ressort en caoutchouc.

9. Bielle selon la revendication 8,
**caractérisée en ce**
**que** le ressort en caoutchouc comporte deux anneaux (24, 25) en particulier en métal et entre les deux anneaux (24, 25) une couche de caoutchouc annulaire, par exemple déposée par vulcanisation.

10. Bielle selon l'une des revendication 4 à 9,
**caractérisée en ce**
**que** la couche amortissant les vibrations (22) est conçue de telle façon qu'elle présente une élasticité plus grande dans la direction périphérique que dans la direction radiale, et est de préférence relativement rigide dans la direction radiale.

11. Bielle selon l'une des revendications 1 à 10,
**caractérisée en ce**
**que** le palier de bielle (17) est encastré dans la bielle (14) au moyen du logement de palier amortisseur de vibrations (21).

12. Bielle selon l'une des revendications 1 à 11,
**caractérisée en ce**
**que** le palier (19) du point de couplage est encastré dans la bielle (14) et/ou dans une partie (11) du piston (10) au moyen du logement de palier amortisseur de vibrations (21).
